# EUROPEAN PATENT SPECIFICATION

(11) **EP 4 222 993 B1**
(45) Date of publication and mention of the grant of the patent: **25.12.2024**
(21) Application number: 21786173.1
(22) Date of filing: 29.09.2021
(51) Int. Cl.: H04W 4/70, H04L 9/40

(54) **INTERNET OF THINGS SECURITY**
INTERNET-DER-DINGE-SICHERHEIT
SÉCURITÉ DE L'INTERNET DES OBJETS

(30) Priority: 29.09.2020 GB 202015370
(43) Date of publication of application: 09.08.2023
(73) Proprietor: British Telecommunications public limited company, London E1 8EE (GB)
(72) Inventor: WANG, Xiao-Si, London EC4V 5BT (GB); NUGENT, Christopher, London EC4V 5BT (GB); CHOUHAN, Pushpinder, London EC4V 5BT (GB); BISWAS, Md, London EC4V 5BT (GB)
(74) Representative: British Telecommunications public limited company Intellectual Property Department
(86) International application number: PCT/EP2021/076741
(87) International publication number: WO 2022/069514

(56) References cited:
- US-A1- 2015 365 438
- US-A1- 2016 182 559
- US-A1- 2018 300 477
- US-A1- 2019 289 026
- PIDS: "5G report to be checked for LI", vol. TC - LI - Lawful Interception, 30 August 2017 (2017-08-30), pages 1 - 605, XP014298841, Retrieved from the Internet <URL:docbox.etsi.org\LI\LI\05-CONTRIBUTIONS\2017\LI(17)R41001r1_5G_report_to_be_checked_for_LI_\33899-130.docx> [retrieved on 20170830]

## Description

The present invention relates to security of internet of things (IoT) devices.

The Internet-of-Things (IoT) is comprised of physical objects (things) coupled with, embedded with, comprising or constituting network-connected sensors and/or actuators. Conventional objects can be supplemented by such sensors/actuators or specific loT components can be provided as such. For example, domestic appliances, smart home technology, industrial apparatus or conceivably any object may include network connected sensors and/or actuators.

Due to the network-connected nature of loT devices, they are susceptible to malicious action such as intrusion, modification, misappropriation, denial of service, misuse or other conceivable malicious activities. Furthermore, loT devices include low-performance, low-resource devices lacking capabilities to detect and respond to such malicious actions. Document 3GPP TR 33.899 V1.3.0 (2017-08) discloses a method, wherein if the authentication frequency of a UE is higher than a certain threshold, then the network will consider the UE's behaviour as abnormal and block the UE's authentication process for a back-off time.

Accordingly there is a need to address security of loT devices.

According to a first aspect of the present invention, there is provided a computer implemented security method for a set of internet-of-things (IoT) devices, the set of devices comprising network-connected sensors and actuators, wherein a data repository stores data about the devices, actions performable by each of the devices and one or more network attacks to which at least a subset of the devices are susceptible, the method comprising: defining, for each network attack, one or more responsive actions for the attack, each responsive action identifying one or more performable actions for performance by one or more devices to mitigate the attack; detecting a device in a compromised state, the compromised state being determined based on a threshold number of occurrences of an attack perpetrated against the device; selecting responsive actions for the perpetrated attack; and triggering the responsive actions to mitigate the perpetrated attack.

Preferably, multiple devices are detected in a compromised state and the method further comprising: prioritising the multiple compromised devices based on the threshold number of occurrences for each device.

Preferably, triggering the responsive actions includes communicating with the one or more devices for the responsive actions to trigger the performable actions identified by the responsive actions, wherein the communication is encrypted.

Preferably, the data repository further includes the defined responsive actions.

Preferably, selecting responsive actions includes identifying devices within a predetermined proximity of the compromised device so as to provide the mitigation of the perpetrated attack in proximity to an effect of the attack.

Preferably, the compromised state is detected based on data received from one or more sensor devices.

Preferably, the compromised state is detected based on network traffic communicated with the compromised device.

According to a second aspect of the present invention, there is a provided a computer system including a processor and memory storing computer program code for performing the steps of the method set out above.

According to a third aspect of the present invention, there is a provided a computer system including a processor and memory storing computer program code for performing the steps of the method set out above.

The invention is disclosed in the appended claims.

Embodiments of the present invention will now be described, by way of example only, with reference to the accompanying drawings, in which:
Figure 1 is a block diagram a computer system suitable for the operation of embodiments of the present invention;
Figure 2 is component diagram of an exemplary arrangement of a security mechanism for loT devices according to embodiments of the present invention;
Figure 3 is component diagram of a further exemplary arrangement of a security mechanism for loT devices according to embodiments of the present invention; and
Figure 4 is a flowchart of a security method for loT devices according to embodiments of the present invention.

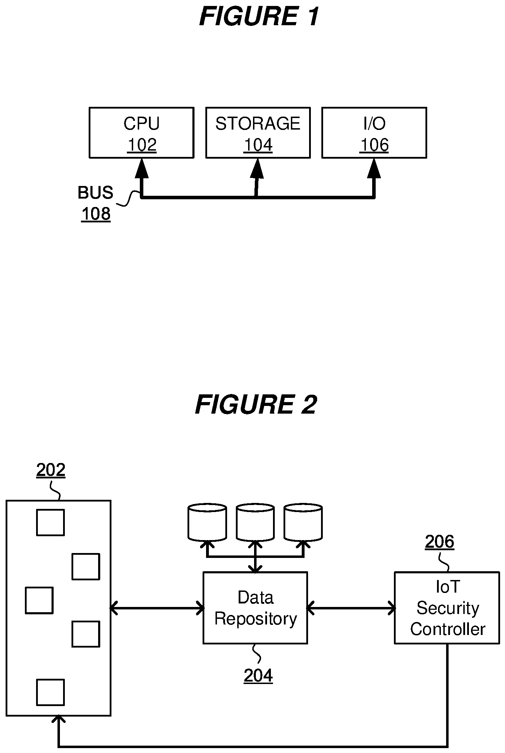

Figure 1 is a block diagram of a computer system suitable for the operation of embodiments of the present invention. A central processor unit (CPU) 102 is communicatively connected to a storage 104 and an input/output (I/O) interface 106 via a data bus 108. The storage 104 can be any read/write storage device such as a random-access memory (RAM) or a non-volatile storage device. An example of a non-volatile storage device includes a disk or tape storage device. The I/O interface 106 is an interface to devices for the input or output of data, or for both input and output of data. Examples of I/O devices connectable to I/O interface 106 include a keyboard, a mouse, a display (such as a monitor) and a network connection.

Embodiments of the present invention trigger responsive actions to mitigate an attack perpetrated against an loT device. In particular, the responsive actions are determined based on a data repository storing data about a set of loT devices, actions performable by the devices and attacks to which at least some of the devices are susceptible. Responsive actions are defined for each attack identifying actions to be performed by devices to mitigate an attack. For example, a sensor loT device detecting a sound, temperature or other measurable or detectable occurrence may be determinative of an occurrence of an attack. Embodiments of the present invention detect such attack constituting a compromised state of the sensor or a device proximate to or in communication with the sensor. Responsive actions are determined base don the data repository and defined responsive actions to trigger the actions to mitigate the attack. The triggered actions are performed by one or more devices identified by the responsive actions that can include devices other than the device in the compromised device.

Figure 2 is component diagram of an exemplary arrangement of a security mechanism for loT devices according to embodiments of the present invention. A set of loT devices 202 includes network connected sensors and actuators. Such loT devices 202 can include, inter alia, by way of example only: temperature sensors; sound sensors; moisture/humidity sensors; pressure sensors; signal sensors; light sensors; time sensors; olfactory sensors; detectors such as gas detectors; cameras; movement actuators; sound emitting actuators; heaters; coolers; dispensers such as gas, liquid, article or other dispensers; network communicators; doorbells; thermostats; sprinklers; fire alarms; lights; baby monitors; message senders such as short-messaging-service transmitters; security cameras; alarms; emergency callers; webcams; network connected domestic appliances; entertainment devices; or any combinations thereof, or other devices as will be apparent to those skilled in the art. Notably, the loT devices 202 can each be independent and not directly interoperable such as loT devices that are not associated with each other, except that all loT devices are network connected such as by wired or wireless connection to the internet, an intranet, or other suitable communications network.

A data repository 204 is provided in communication with the loT devices 202 and includes one or more data stores such as databases, files or the like storing data about the loT devices 202. Such data can include, for example, an identification of each device, a name of each device and a type of each device, such type being indicative of a nature of the device (e.g. a sensor, actuator or both) and/or it's capabilities. Thus, the data repository 204 also includes data identifying any actions performable by each of the devices in which sensing and actuation are examples of actions. The data repository 204 further stores information about one or more network attacks to which at least a subset of the devices are susceptible, such as attacks by which control of a device is obtained by a malicious agent or attacks by which device data is accessible to a malicious agent. Network attack information stored in the data repository 204 is defined such that network attacks can be detected or otherwise recognised by, for example, definition of the characteristics, symptoms or effects of each attack in the data repository 204. The network attacks are so-called because they are perpetrated via a network via which a target loT device communicates. Notably, such network can include communications by unconventional means including, for example, data transfer by light or sound.

According to embodiments of the present invention, one or more responsive actions for each identified network attack are defined. Such responsive actions can be stored by the data repository 204 or elsewhere (such as the controller 206 described below). Each responsive action identifies one or more performable actions for performance by one or more devices to mitigate an identified network attack. Notably, the performable actions can be performed by one or more devices other than an attacked device. For example, where a light-emitting loT device is attacked, a responsive action can involve a sound-emitting loT device performing an action.

An loT security controller 206 is provided as a hardware, software, firmware or combination component in communication with the data repository 204 (such as by direct connection, link or network connection). The controller 206 is operable to identify attacks of devices 202 based on the data repository 204, so detecting devices 202 in a compromised state. The detection, by the controller 206, of a device in a compromised state is made with reference to the attack information stored in the data repository 204. Such attack information can be used to detect attacks to determine one or more devices 202 in a compromised state based on either or both of: data received from loT devices 202 such as sensors; and network traffic communicated by, to or with loT devices 202, such as anomalous or modified network traffic.

The controller 206 is further operable to select one or more responsive actions for the attacks based on the defined responsive actions and trigger the responsive actions to mitigate the perpetrated attack. In this way, the controller 206 is operable to detect and respond to network attacks perpetrated against loT devices 202.

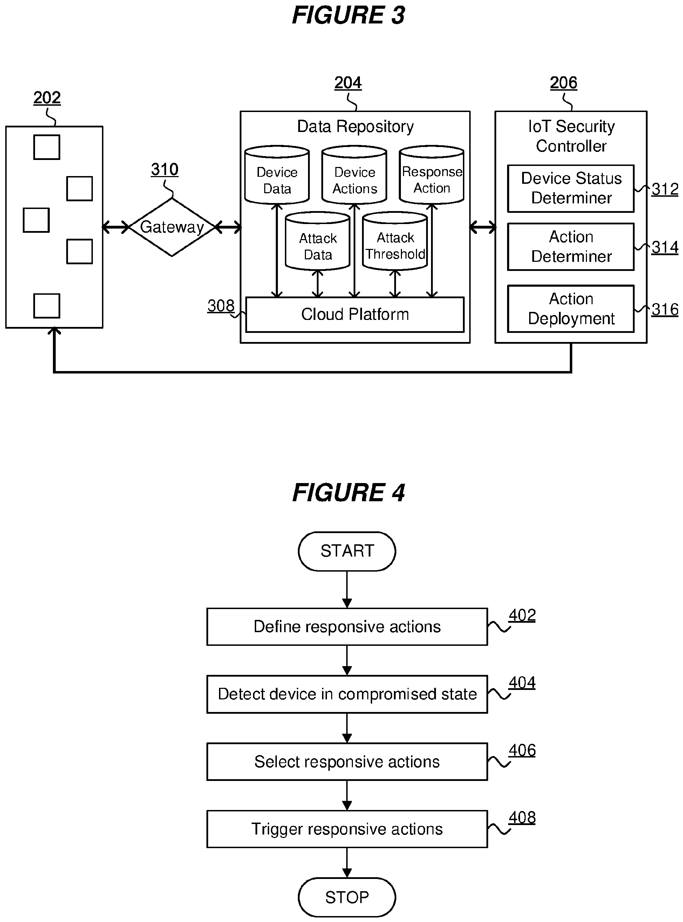

A detailed exemplary arrangement of the security mechanism will now be described with reference to Figure 3. Figure 3 is component diagram of a further exemplary arrangement of a security mechanism for loT devices according to embodiments of the present invention. Many of the features of Figure 3 are identical to those described above with respect to Figure 2 and these will not be repeated here. Figure 3 further includes an loT gateway component 310 for managing data communication between loT devices (that can communicate in disparate ways or using disparate protocols). Such an loT gateway provides access to information about or from, and communication with, the loT devices by the data repository 204 and the controller 206. In some embodiments the gateway is configured to perform processing of data received from or sent to loT devices 202, such as for conversion to a common format, parsing to interpret data, cryptographic processing of data, normalising of data or the like. Such loT gateway 310 thus provides interoperability and potentially scalability between different networks, network protocols, loT device standards and the loT devices 202 themselves.

The data repository 204 of Figure 3 further includes a cloud platform 308 such as one or more hosted data facilities provided by a platform as a service or software as a service mechanism and/or by a network-connected data storage and retrieval mechanism. The data repository 204 includes data stores such as databases which can be unified, separated, combined, distributed, localised or otherwise arranged as will be apparent to those skilled in the art. A "device data" data store is provided including device data such as one or more of a device identifier, name, functions, location, capabilities, version, vendor or other device information about at least a subset of the loT devices 202. A "device actions" data store is provided including an indication, for at least a subset of the devices 202, of sensing and/or actuation actions performable by the devices. An "attack data" data store is provided including, for each of at least subset of the devices 202, an identification of a device and an identification of an attack that may be perpetrated against the device. Each attack preferably has associated attack characteristics, criteria or other information suitable for detecting the attack. The data store 204 further includes an "attack threshold" data store identifying, for each device and each attack to which the device is susceptible, a threshold degree or extent of the attack which, when met, indicates that an attack is malicious and/or otherwise indicates that the attack is to be mitigated. For example, the threshold degree can be a number of occurrences of an attack against a device before the attack is determined to require mitigation and/or the device is determined to require protection or remedial action. The data repository 204 further includes a "response action" data store defining performable actions that are to be triggered in one or more devices 202 in response to an identified attack. Such "response action" data includes the responsive actions described earlier.

The controller 206 of Figure 3 includes a device status determiner 312 component as a hardware, software, firmware or combination component for determining a status of an loT device 202 and, specifically, to determine if a device 202 is in a compromised state. The device status determiner 312 uses the "attack data" data store of the data repository 204 to make such a determination. Notably, such determination is made with reference to the "attack threshold" data store such that a compromised state is determined based on a threshold number of occurrences of an attack perpetrated against the device.

The controller 206 of Figure 3 further includes an action determiner 314 component as a hardware, software, firmware or combination component for determining one or more responsive actions to an attack detected by way of a detection of a compromised state by the device status determiner 312. The responsive actions are selected based on the "response actions" data store and, in some embodiments, the "device actions" data store and include an identification of one or more selected devices 202 and the actions such devices are to perform in response to the detected attack. Subsequently, an action deployment 316 component as a hardware, software, firmware or combination component is operable to trigger activation, execution or performance of the selected responsive actions by loT devices 202 to mitigate the perpetrated attack.

In one embodiment, at least the triggering by the action deployment component 316 is performed by network communication to or with the loT devices 202 where the communication is encrypted. In this way information relating to the responsive actions and their triggering is not susceptible to interception or modification by an attacker.

In one embodiment, the selectin of responsive actions by the action determiner 314 component includes identifying loT devices 202 within a predetermined proximity of a compromised device. In this way responsive actions can be mitigated by devices 202 proximate to devices in a compromised state.

Figure 4 is a flowchart of a security method for loT devices according to embodiments of the present invention. Initially, at step 402, the method defines responsive actions for each network attack, each responsive action identifying performable actions for performance by devices to mitigate the attack. At step 404 the device status determiner 312 detects a device in a compromised state based on a threshold number of occurrences of an attack perpetrated against the device. At step 406 the action determiner 314 selects responsive actions for the perpetrated attack and at step 408 the action deployment component 316 triggers the selected responsive actions to mitigate the perpetrated attach.

Insofar as embodiments of the invention described are implementable, at least in part, using a software-controlled programmable processing device, such as a microprocessor, digital signal processor or other processing device, data processing apparatus or system, it will be appreciated that a computer program for configuring a programmable device, apparatus or system to implement the foregoing described methods is envisaged as an aspect of the present invention. The computer program may be embodied as source code or undergo compilation for implementation on a processing device, apparatus or system or may be embodied as object code, for example.

Suitably, the computer program is stored on a carrier medium in machine or device readable form, for example in solid-state memory, magnetic memory such as disk or tape, optically or magneto-optically readable memory such as compact disk or digital versatile disk etc., and the processing device utilises the program or a part thereof to configure it for operation. The computer program may be supplied from a remote source embodied in a communications medium such as an electronic signal, radio frequency carrier wave or optical carrier wave. Such carrier media are also envisaged as aspects of the present invention.

It will be understood by those skilled in the art that, although the present invention has been described in relation to the above described example embodiments, the invention is not limited thereto and that there are many possible variations and modifications which fall within the scope of the invention.

The scope of the present invention includes any novel features or combination of features disclosed herein. The applicant hereby gives notice that new claims may be formulated to such features or combination of features during prosecution of this application or of any such further applications derived therefrom. In particular, with reference to the appended claims, features from dependent claims may be combined with those of the independent claims and features from respective independent claims may be combined in any appropriate manner and not merely in the specific combinations enumerated in the claims.

## Claims

1. A computer implemented security method, performed by a controller, for a set of internet-of-things (IoT) devices, the set of devices comprising network-connected sensors and actuators, wherein a data repository stores data about the set of devices, actions performable by each of the devices and one or more network attacks to which at least a subset of the set of devices are susceptible, the method comprising:
defining, for each of the one or more network attacks, one or more responsive actions, each responsive action identifying one or more performable actions for performance by one or more devices of the set of devices to mitigate a corresponding network attack of the one or more network attacks;
detecting a device of the set of devices in a compromised state, the compromised state being determined based on a threshold number of occurrences of a network attack, of the one or more network attacks, perpetrated against the device;
selecting responsive actions, of said one or more responsive actions, for the perpetrated attack; and
triggering the selected responsive actions to mitigate the perpetrated network attack, wherein triggering the selected responsive actions includes communicating with the one or more devices to trigger the performable actions identified by the selected responsive actions.

2. The method of claim 1 wherein multiple devices are detected in a compromised state, the method further comprising:
prioritising the multiple devices in the compromised state based on the threshold number of occurrences for each device.

3. The method of any preceding claim, wherein the communication is encrypted.

4. The method of any preceding claim wherein the data repository further includes the defined one or more responsive actions.

5. The method of any preceding claim wherein selecting responsive actions includes identifying devices within a predetermined proximity of the compromised device and using the identified proximate device to provide the mitigation of the perpetrated attack.

6. The method of any of claims 1 to 4 wherein the one or more devices comprise the compromised device.

7. The method of any preceding claim, wherein communication by the data repository and the controller with the set of loT devices is provided by a gateway.

8. The method of any preceding claim wherein the compromised state is detected based on data received from one or more sensors of the network-connected sensors.

9. The method of any preceding claim wherein the compromised state is detected based on network traffic communicated with the compromised device.

10. A computer system including a processor and memory storing computer program code which, when executed by the processor, causes the processor to perform the steps of the method of any preceding claim.

11. A computer program element comprising computer program code to, when loaded into a computer system and executed thereon, cause the computer system to perform the steps of a method as claimed in any of claims 1 to 9.

## Patentansprüche

1. Computerimplementiertes Sicherheitsverfahren, das durch eine Steuereinheit durchgeführt wird, für einen Satz von Vorrichtungen des Internets der Dinge (IoT-Vorrichtungen), wobei der Satz von Vorrichtungen mit einem Netz verbundene Sensoren und Aktoren umfasst und eine Datenablage Daten über den Satz von Vorrichtungen, Aktionen, die durch jede der Vorrichtungen durchführbar sind, und einen oder mehrere Netzangriffe, für die mindestens eine Untermenge des Satzes von Vorrichtungen empfindlich ist, speichert, und das Verfahren Folgendes umfasst:
Definieren für jeden des einen oder der mehreren Netzangriffe einer oder mehrerer reaktiver Aktionen, wobei jede reaktive Aktion eine oder mehrere durchführbare Aktionen zur Durchführung durch eine oder mehrere Vorrichtungen des Satzes von Vorrichtungen, um einen entsprechenden Netzangriff des einen oder der mehreren Netzangriffe abzuschwächen, identifiziert;
Detektieren einer Vorrichtung des Satzes von Vorrichtungen in einem kompromittierten Zustand, wobei der kompromittierte Zustand auf der Grundlage einer Schwellenwertauftrittsanzahl eines Netzangriffs des einen oder der mehreren Netzangriffe, die gegen die Vorrichtung verübt werden, bestimmt wird;
Wählen reaktiver Aktionen der einen oder der mehreren reaktiven Aktionen für den verübten Angriff und
Auslösen der gewählten reaktiven Aktionen, um den verübten Netzangriff abzuschwächen, wobei das Auslösen der gewählten reaktiven Aktionen ein Kommunizieren mit der einen oder den mehreren Vorrichtungen enthält, um die durchführbaren Aktionen auszulösen, die durch die gewählten reaktiven Aktionen identifiziert werden.

2. Verfahren nach Anspruch 1, wobei mehrere Vorrichtungen in einem kompromittierten Zustand detektiert werden und das Verfahren ferner Folgendes umfasst:
Priorisieren der mehreren Vorrichtungen im kompromittierten Zustand auf der Grundlage der Schwellenwertauftrittsanzahl für jede Vorrichtung.

3. Verfahren nach einem vorhergehenden Anspruch, wobei die Kommunikation verschlüsselt ist.

4. Verfahren nach einem vorhergehenden Anspruch, wobei die Datenablage ferner die eine oder die mehreren definierten reaktiven Aktionen enthält.

5. Verfahren nach einem vorhergehenden Anspruch, wobei das Wählen reaktiver Aktionen ein Identifizieren von Vorrichtungen in einer vorgegebenen Umgebung der kompromittierten Vorrichtung und ein Verwenden der identifizierten Vorrichtung in der Umgebung zum Bereitstellen der Abschwächung des verübten Angriffs umfasst.

6. Verfahren nach einem der Ansprüche 1 bis 4, wobei die eine oder die mehreren Vorrichtungen die kompromittierte Vorrichtung umfassen.

7. Verfahren nach einem vorhergehenden Anspruch, wobei eine Kommunikation durch die Datenablage und die Steuereinheit mit dem Satz von IoT-Vorrichtungen durch ein Gateway bereitgestellt wird.

8. Verfahren nach einem vorhergehenden Anspruch, wobei der kompromittierte Zustand auf der Grundlage von Daten detektiert wird, die von einem oder mehreren Sensoren der mit einem Netz verbundenen Sensoren empfangen wurden.

9. Verfahren nach einem vorhergehenden Anspruch, wobei der kompromittierte Zustand auf der Grundlage eines Netzverkehrs detektiert wird, der mit der kompromittierten Vorrichtung kommuniziert wird.

10. Computersystem, das einen Prozessor und einen Speicher, der Computerprogrammcode speichert, der, wenn er durch den Prozessor ausgeführt wird, bewirkt, dass der Prozessor die Schritte des Verfahrens nach einem vorhergehenden Anspruch durchführt, enthält.

11. Computerprogrammelement, das Computerprogrammcode, um dann, wenn er in ein Computersystem geladen und darin ausgeführt wird, das Computersystem zu veranlassen, die Schritte eines Verfahrens nach einem der Ansprüche 1 bis 9 durchzuführen, umfasst.

## Revendications

1. Procédé de sécurité mis en œuvre par ordinateur, réalisé par un contrôleur, pour un ensemble de dispositifs de l'Internet des Objets (IoT), l'ensemble de dispositifs comprenant des capteurs et des actionneurs connectés en réseau, un référentiel de données stockant des données concernant l'ensemble de dispositifs, des actions réalisables par chacun des dispositifs et une ou plusieurs attaques de réseau auxquelles est exposé au moins un sous-ensemble de l'ensemble de dispositifs, le procédé comprenant :
la définition, pour chacune des une ou plusieurs attaques de réseau, d'une ou de plusieurs actions de riposte, chaque action de riposte identifiant une ou plusieurs actions réalisables à réaliser par un ou plusieurs dispositifs de l'ensemble de dispositifs pour pallier une attaque de réseau correspondante parmi les une ou plusieurs attaques de réseau ;
la détection d'un dispositif de l'ensemble de dispositifs dans un état compromis, l'état compromis étant déterminé sur la base d'un nombre seuil de survenances d'une attaque de réseau, parmi les une ou plusieurs attaques de réseau, perpétrée contre le dispositif ;
la sélection d'actions de riposte, parmi lesdites une ou plusieurs actions de riposte, pour l'attaque perpétrée ; et
le déclenchement des actions de riposte sélectionnées pour pallier l'attaque de réseau perpétrée, le déclenchement des actions de riposte sélectionnées comportant la communication avec les un ou plusieurs dispositifs pour déclencher les actions réalisables identifiées par les actions de riposte sélectionnées.

2. Procédé selon la revendication 1, de multiples dispositifs étant détectés dans un état compromis, le procédé comprenant en outre :
la priorisation des multiples dispositifs dans l'état compromis sur la base du nombre seuil de survenances pour chaque dispositif.

3. Procédé selon l'une quelconque des revendications précédentes, la communication étant chiffrée.

4. Procédé selon l'une quelconque des revendications précédentes, le référentiel de données comportant en outre les une ou plusieurs actions de riposte définies.

5. Procédé selon l'une quelconque des revendications précédentes, la sélection d'actions de riposte comportant l'identification de dispositifs à une proximité prédéterminée du dispositif compromis et l'utilisation du dispositif à proximité identifié pour pallier l'attaque perpétrée.

6. Procédé selon l'une quelconque des revendications 1 à 4, les un ou plusieurs dispositifs comprenant le dispositif compromis.

7. Procédé selon l'une quelconque des revendications précédentes, la communication par le référentiel de données et le contrôleur avec l'ensemble de dispositifs IoT étant fournie par une passerelle.

8. Procédé selon l'une quelconque des revendications précédentes, l'état compromis étant détecté sur la base de données reçues depuis un ou plusieurs capteurs parmi les capteurs connectés en réseau.

9. Procédé selon l'une quelconque des revendications précédentes, l'état compromis étant détecté sur la base d'un trafic de réseau communiqué avec le dispositif compromis.

10. Système informatique comportant un processeur et une mémoire stockant un code de programme informatique qui, lorsqu'il est exécuté par le processeur, amène le processeur à réaliser les étapes du procédé selon l'une quelconque des revendications précédentes.

11. Élément de programme informatique comprenant un code de programme informatique pour, lorsqu'il est chargé dans un système informatique et exécuté sur celui-ci, amener le système informatique à réaliser les étapes d'un procédé selon l'une quelconque des revendications 1 à 9.
